# EUROPÄISCHE PATENTANMELDUNG

(11) **EP 1 065 823 A1**
(43) Veröffentlichungstag der Anmeldung: **03.01.2001**
(21) Anmeldenummer: 99112406.6
(22) Anmeldetag: 29.06.1999
(51) Int. Cl.: H04L 1/24, H04L 1/00

(54) **Verfahren zur Überwachung der Bitübertragungsgüte bei paketorientierter Übertragung**

(71) Anmelder: SIEMENS AKTIENGESELLSCHAFT, 80333 München (DE)
(72) Erfinder: Charzinski, Joachim, Dipl.-Ing., 85764 Oberschleissheim (DE)

(57) **Zusammenfassung**

Bei einer verbindungslosen Vermittlung, wie sie eine IP-Paketvermittlung darstellt, wird zur Überwachung der Bitübertragungsgüte jedes Paket mit einer Prüfsumme versehen. Mit Hilfe dieser Prüfsumme kann empfangsseitig lediglich eine Aussage darüber getroffen werden, daß auf dem gesammten Übertragungsabschnitt (end-to-end) ein Übertragungsfehler aufgetreten ist. Ein abschnittsweises Erfassen der während des Übertragungsvorganges aufgetretenen Bitfehler ist aber nicht möglich. Zur Lösung dieses Problems wird eine weitere Prüfinformation gebildet, die dem Paket mitgegeben wird.

## Beschreibung

Die Erfindung betrifft ein Verfahren gemäß dem Oberbegriff von Patentanspruch 1.

Bei zeitgemäßen Informationsverarbeitungssystemen werden Informationen in IP-Paketen (Internet Protocol) übertragen. Hierbei handelt es sich um eine verbindungslose Vermittlung, mittels der keine dauernde Verbindung zwischen der sendenden und der empfangenden Einrichtung erstellt wird.

Zum Erkennen von Übertragungsfehlern wird jedes Paket mit einer Prüfsumme versehen. Mit Hilfe dieser Prüfsumme können empfangsseitig Bitfehler ermittelt werden. Die Berechnung der Prüfsumme wird beispielsweise über alle zwischen zwei Referenzpunkten übertragenen Informationen durchgeführt. Als Referenzpunkte können beispielsweise zwei Vermittlungsknoten fungieren, zwischen denen ein aus einer Mehrzahl von Teilabschnitten gebildeter Übertragungsabschnitt angeordnet ist. Die Teilabschnitte werden durch auf dem Übertragungsabschnitt angeordnete Regeneratoren gebildet.

Die Berechnung der Prüfsumme wird sowohl im sendenden als auch im empfangenden Vermittlungsknoten unabhängig voneinander durchgeführt. Dabei wird z.B. eine CRC-Berechnung sendeseitig vorgenommen, die dem zu übertragenen Paket mitgegeben wird. Empfangsseitig wird diese mitübertragene Prüfsumme ausgewertet und mit der Berechnung einer über die empfangenen Informationen gebildeten weiteren Prüfsumme verglichen. Ergibt sich aus diesem Vergleich eine Differenz, wird das empfangene Paket verworfen.

Mit dieser Vorgehensweise können somit Übertragungsfehler auf dem gesammten Übertragungsabschnitt, d.h. zwischen den beiden Vermittlungsknoten erkannt werden. Ein in vielen Fällen erforderliches abschnittsweises Ermitteln der Rate von Übertragungsfehlern ist mit dieser Vorgehensweise nicht möglich.

Der Erfindung liegt die Aufgabe zugrunde, einen Weg aufzuzeigen, wie auch bei verbindungsloser Vermittlung eine effizientere Überwachung der Bitübertragungsgüte abschnittsweise vorgenommen werden kann.

Die Erfindung wird, ausgehend vom Oberbegriff von Patentanspruch 1, durch die im kennzeichnenden Teil angegebenen Merkmale gelöst.

Vorteilhaft an der Erfindung ist insbesondere daß ein abschnittsweises Erfassen der während des Übertragungsvorganges aufgetretenen Bitfehler möglich ist, während das beim Stand der Technik verwendete Prüfsummenverfahren lediglich eine end-to-end Aussage zuläßt. Hierzu wird in einem sendenden Regenerator über diese und gegebenenfalls weitere Informationen des auszusendenden Paketes nach Maßgabe eines Algorithmuses eine zweite Prüfinformation gebildet, die dem Paket ebenfalls mitgegeben und lediglich im empfangenden Regenerator ausgewertet wird, und die mit einer hier nach dem gleichen weiteren Algorithmus gebildete Prüfinformation verglichen wird.

Vorteilhafte Weiterbildungen der Erfindung sind in den Unteransprüchen vorgesehen.

Die Erfindung wird im folgenden anhand eines Ausführungsbeispiels näher erläutert.

Es zeigen:
- Figur 1: 2 Vermittlungsknoten, die einen Übertragungsabschnitt abschließen,
- Figur 2: die Rahmenstruktur,in die IP-Pakete während der Übertragung eingefügt sind,

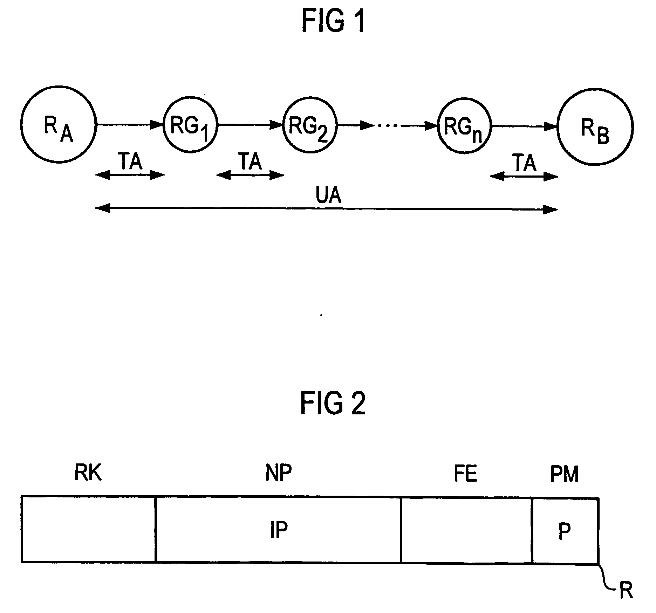

In Fig. 1 ist eine Konfiguration aufgezeigt, auf der das erfindungsgemäße Verfahren zum Ablauf gelangt. Demgemäß sind zwei Vermittlungsknoten R_{A}, R_{B} aufgzeigt, die einen Übertragungsabschnitt UA abschließen. Zwischen den Vermittlungsknoten R_{A}, R_{B} sind in den Übertragungsabschnitt UA eine Mehrzahl von Regeneratoren RG₁...RGₙ angeordnet. Jeweils 2 dieser Regeneratoren schließen Teilabschnitte TA ab, womit der gesammte Übertragungsabschnitt UA aus diesen Teilabschnitten TA gebildet wird. Die Vermittlungsknoten R_{A}, R_{B} sollen gemäß vorliegendem Ausführungsbeispiel als IP-Router ausgebildet sein.

Ferner wird davon ausgegangen, daß über den Übertragungsabschnitt UA IP-Pakete mit Hilfe des WDM (Wave Division Multiplexing) Übertragungsverfahrens geleitet werden. Gemäß vorliegendem Ausführungsbeispiel wird ferner davon ausgegangen, daß der sendende Vermittlungsknoten der IP-Router R_{A} und der empfangende Vermittlungsknoten der IP-Router R_{B} ist. Der sendende IP-Router R_{A} überträgt IP-Pakete unterschiedlicher Länge über den Übertragungsabschnitt UA zum empfangenden IP-Router R_{B}. Der Übertragungsabschnitt UA ist bidirektional ausgebildet, zum besseren Verständnis ist jedoch lediglich die Übertragung vom sendenden IP-Router R_{A} zum empfangenden IP-Router R_{B} aufgezeigt.

In Fig. 2 ist aufgezeigt, wie die IP-Pakete über den Übertragungsabschnitt UA gesendet werden. Demgemäß wird ein IP-Paket im IP-Router R_{A} in eine Rahmenstruktur R eingebunden (Einkapselung). Hierzu wird das IP-Paket in ein Nutzlastpaketfeld NP eingefügt. Diesem wird ein Rahmenkopf RK vorangestellt. Dort sind Informationen über z.B. den Rahmenanfang und die Rahmenlänge abgelegt. Ferner ist ein Feld zur Fehlererkennung FE vorgesehen, in dem das Resultat von Prüfsummenberechnungen abgelegt ist. Als Prüfsummenberechnungen können beispielsweise CRC-Prüfsequenzen verwendet werden. Diese Prüfsequenzen werden im IP-Router R_{A} erzeugt und im IP-Router R_{B} ausgewertet (end-to-end). Damit kann hier eine Aussage über die Übertragungsqualität des gesammten, zwischen dem IP-Router R_{A} und dem IP-Router R_{B} angeordneten Übertragungsabschnittes UA getroffen sowie fehlerhafte Pakete erkannt und verworfen werden.

Erfindungsgemäß ist nun zusätzlich ein Paritätsfeld PM vorgesehen, in dem Paritätsbits P übertragen werden. Die Paritätsbits P werden beispielsweise nach der BIP-Berechnungsmethode (Bit Interleaved Parity) im sendenden Regenerator ermittelt und über den betreffenden Teilabschnitt TA im Paritätsfeld PM dem empfangsseitig angeordneten Regenerator zugeführt. Die Paritätsbits P werden mit jedem Nutzdatenrahmen im Paritätsfeld PM übertragen und werden innerhalb des Rahmens R entweder nur auf das Nutzlastpaket NP, auf das Nutzlastpaket NP zusammen mit der Prüfsumme FE, oder auf das Nutzlastpaket NP zusammen mit der Prüfsumme FE und dem Rahmenkopf RK errechnet. Wenn die Breite des Paritätsfeldes PM 1 Bit beträgt, kann ein einfaches Paritätsbit zur Berechnung herangezogen werden.

Im empfangsseitig angeordneten Regenerator werden die Paritätsbits P ausgewertet und mit einer hier vorgenommenen eigenen Paritätsbewertung verglichen. Nach Maßgabe des Ergebnisses wird das Paritätsbit P neu gesetzt und in das Paritätsfeld PM eingetragen. Weiterhin wird im empfangenden Regenerator eine hier geführte Statistik über aufgetretene Übertragungsfehler aktualisiert.

Da sich in den Paritätsbits P Mehrfachfehler gegenseitig aufheben können, wird die Anzahl der auf einem Übertragungsabschnitt aufgetretenen Bitfehler nach der Maximum-Likelihood Methode als die Anzahl der Bits geschätzt, in denen sich die eigene Berechnung der Paritätsbits P eines Regenerators von den empfangenen Paritätsbits unterscheidet. Die momentane Bitfehlerrate wird als Quotient der Schätzung für die Anzahl aufgetretener Bitfehler geteilt durch die Anzahl der Bits im übertragenen Rahmen angenommen. Eine Schätzung der Bitfehlerrate, wie sie für Performance-Monitoring Zwecke durchaus ausreichend ist, erhält man durch Mittelung einer Anzahl aufeinanderfogender Momentanschätzungen.

Mit dieser Vorgehensweise wird eine abschnittsweise Bitfehlerratenschätzung möglich. Die in den einzelnen Regeneratoren abgelegten abschnittsweisen Bitfehlerratenschätzungen können dann beispielsweise über X.25 Protokolle ausgelesen werden.

## Patentansprüche

1. Verfahren zur Überwachung der Bitübertragungsgüte bei paketorientierter Übertragung, mit
einer Sendeeinrichtung (R_{A}), von der Informationen in Paketen nach Maßgabe einer verbindungslosen Vermittlung einer Empfangseinrichtung (R_{B}) über einen, eine Mehrzahl von Übertragungseinrichtungen (RG₁...RGₙ) aufweisenden Übertragungsabschnitt (UA) zugeführt werden, wobei in der Sendeeinrichtung (R_{A}) über die Informationen des auszusendenden Paketes nach Maßgabe eines Algorithmuses eine erste Prüfinformation (FE) gebildet wird, die dem Paket mitgegeben wird, und die bei Eintreffen des Paketes in der Empfangseinrichtung (R_{B}) mit einer hier nach dem gleichen Algorithmus gebildete Prüfinformation verglichen wird,
**dadurch gekennzeichnet,**
daß in der Sendeeinrichtung (R_{A}) oder einer sendenden Übertragungseinrichtung (RG₁...RGₙ) über die Informationen des auszusendenden Paketes und gegebenenfalls weitere Informationen nach Maßgabe eines weiteren Algorithmuses eine zweite Prüfinformation (P) gebildet wird, die dem Paket ebenfalls mitgegeben wird, und die in der Empfangseinrichtung (R_{B}) oder einer empfangenden Übertragungseinrichtung (RG₁...RGₙ) ebenfalls ausgewertet und mit einer hier nach dem gleichen weiteren Algorithmus gebildete Prüfinformation verglichen wird.

2. Verfahren nach Anspruch 1,
**dadurch gekennzeichnet**,
daß für die Übertragung der Pakete über den Übertragungsabschnitt (UA) eine Rahmenstruktur (R) vorgesehen ist, in der das Paket (IP), ein Rahmenkopf (RK) sowie die erste (FE) und zweite Prüfinformation (P) abgelegt sind.

3. Verfahren nach Anspruch 1, 2,
**dadurch gekennzeichnet**,
daß durch die empfangsseitge Auswertung der ersten Prüfinformation (FE) die Übertragungsqualität des gesammten Übertragungsabschnittes (UA) ermittelt wird.

4. Verfahren nach Anspruch 1, 2,
**dadurch gekennzeichnet**,
daß durch die empfangsseitge Auswertung der zweiten Prüfinformation (P) die Übertragungsqualität der einzelnen Teilabschnitte (TA) ermittelt wird.

5. Verfahren nach Anspruch 1 bis 4,
**dadurch gekennzeichnet**,
daß die weiteren Informationen der Rahmenkopf (RK) und/ oder die erste Prüfinformation (FE) sind.

6. Verfahren nach Anspruch 1 bis 5,
**dadurch gekennzeichnet**,
daß die Pakete Informationen nach einem Internet-Protocol (IP-Pakete) übertragen.

7. Verfahren nach einem der vorstehenden Ansprüche,
**dadurch gekennzeichnet**,
daß die zweite Prüfinformation (P) nach Maßgabe einer BIP-Berechnung (Bit Interleaved Parity) erfolgt.

8. Verfahren nach einem der vorstehenden Ansprüche,
**dadurch gekennzeichnet**,
daß die Sende (R_{A}) - und Empfangseinrichtung (R_{B}) als Vermittlungsknoten ausgebildet sind.

9. Verfahren nach einem der vorstehenden Ansprüche,
**dadurch gekennzeichnet**,
daß die Übertragungseinrichtungen als Regeneratoren (RG₁.. ..RGₙ) ausgebildet sind.
